# EUROPÄISCHE PATENTANMELDUNG

(11) **EP 3 632 624 A1**
(43) Veröffentlichungstag der Anmeldung: **08.04.2020**
(21) Anmeldenummer: 18198563.1
(22) Anmeldetag: 04.10.2018
(51) Int. Cl.: B25D 11/12, B29C 45/14, B29C 45/00

(54) **EXZENTERANTRIEB FÜR EINE HANDWERKZEUGMASCHINE**

(71) Anmelder: Hilti Aktiengesellschaft, 9494 Schaan (LI)
(72) Erfinder: Lübkert, Ernst-Rudolf, 86899 Landsberg am Lech (DE); Kristen, Ferdinand, 82205 Gilching (DE); Göttlinger, Michael, 84034 Landshut (DE); Kummer, Maximilian, 89077 Ulm (DE); Schamberger, Michael, 86937 Scheuring (DE); Marder, Johannes, 89231 Neu-ULm (DE); Thomas, Jeltsch, 7013 Domat/Ems (CH); Weis, Simon, 63743 Aschaffenburg (DE); Janisch, Andreas, 7013 Domat/Ems (CH)
(74) Vertreter: Hilti Aktiengesellschaft Corporate Intellectual Property

(57) **Zusammenfassung**

Ein Exzenterantrieb (1) für eine Handwerkzeugmaschine (2) hat einen Motor (5), ein Exzenterrad (6), eine Linearführung (9), einen Schlitten (8) und ein Pleuel (7), das einen an dem Schlitten (8) aufgehängten Kopf (17) und einen zweiten, an dem Exzenterrad (6) aufgehängten Kopf (15) aufweist. Wenigstens an einem der beiden Köpfe (17) ist eine Lagerbuchse (16) zum drehbaren Lagern des Pleuels (7) vorgesehen. Der Kopf (15) besteht aus einem Spritzguss-Werkstoff. Die Lagerbuchse (16) besteht aus einem Faserverbundwerkstoff, welcher in thermoplastischer Matrix eingebettete Endlos-Kohlenstofffasern (25) aufweist.

## Beschreibung

### GEBIET DER ERFINDUNG

Die vorliegende Erfindung betrifft einen Exzenterantrieb für eine Handwerkzeugmaschine.

DE 3314414 A1 beschreibt einen Bohrhammer mit einem Exzenterantrieb. Der Exzenterantrieb enthält ein Pleuel aus Polyamid.

Ein Pleuel aus Kunststoff kann in einem Spritzgussverfahren hergestellt werden. Der Kunststoff wird in eine Form eingespritzt. Der Kunststoff strömt entlang der Hohlräume und soll diese vollständig ausfüllen. Bei einem Pleuel teilen sich die Ströme vor einem Auge und treffen hinter dem Auge wieder aufeinander. Hierbei kann eine Nahtstelle entstehen, welche nur aufwändig zu unterbinden ist. Die Nahtstelle ist eine potentielle Schwächung des Pleuels.

### OFFENBARUNG DER ERFINDUNG

Ein erfindungsgemäßer Exzenterantrieb für eine Handwerkzeugmaschine hat einen Motor, ein Exzenterrad, das von dem Motor angetrieben ist, eine Linearführung, einen Schlitten, welcher von der Linearführung längs einer Achse geführt ist, und ein Pleuel, das einen an dem Schlitten aufgehängten Kopf und einen zweiten, an dem Exzenterrad aufgehängten Kopf aufweist. Wenigstens an einem der beiden Köpfe ist eine Lagerbuchse zum drehbaren Lagern des Pleuels vorgesehen. Der Kopf besteht aus einem Spritzguss-Werkstoff. Die Lagerbuchse besteht aus einem Faserverbundwerkstoff, welcher in thermoplastischer Matrix eingebettete Endlos-Kohlenstofffasern aufweist.

Die Endlosfasern nehmen die Belastungen durch das Exzenterrad flächig auf. Die Endlosfasern sind dabei im Wesentlichen unter Zug belastet. Die thermoplastische Matrix der Lagerbuchse wird nur geringfügig belastet und die Lagerbuchse hält ihre Form. Die Weiterleitung der Kräfte von der Lagerbuchse auf den Kopf erfolgt großflächig über einen wesentlichen Abschnitt der Außenfläche der Lagerbuchse, wodurch die beim Spritzprozess entstehende Nahtstelle des Kopfs entlastet wird.

Die Verwendung von Kohlefasern erweist sich als sehr vorteilhaft in Hinblick auf den Verschleiß des Exzenterrads und Reibungsverluste.

Eine Ausgestaltung sieht vor, dass der Spritzguss-Werkstoff einen thermoplastischen Kunststoff enthält. Der Spritzguss-Werkstoff kann sich ohne Fügezone mit der Lagerbuchse stoffschlüssig verbinden. Hierdurch wird eine gleichmäßige Übertragung der Kräfte zwischen der Lagerbuchse und dem Kopf verbessert.

Eine Ausgestaltung sieht vor, dass die Endlos-Kohlenstofffasern entlang einer Innenfläche der Lagerbuchse verlaufen. Ein Finger des Exzenterrads liegt unmittelbar an den Endlos-Kohlefasern an. Eine Belastung der weichen thermoplastischen Matrix ist hierdurch reduziert.

Eine Ausgestaltung sieht vor, dass die Endlos-Kohlenstofffasern entlang einer Innenfläche der Lagerbuchse verlaufen. Vorzugsweise umlaufen die Endlos-Kohlenstofffasern die Innenfläche wenigstens einmal, vorzugsweise mehr als dreimal.

Eine Ausgestaltung sieht vor, dass eine Länge der Endlos-Kohlenstofffasern wenigstens dem Umfang der Innenfläche der Lagerbuchse entspricht. Die Endlosfasern umschließen quasi ringförmig die Innenfläche, wodurch eine hohe Stabilität gewährleistet ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: ein Pleuel in einen Längsschnitt
- Fig. 2: das Pleuel in einer Draufsicht
- Fig. 3: eine Lagerbuchse des Pleuels von Fig. 2
- Fig. 4: einen Bohrhammer

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

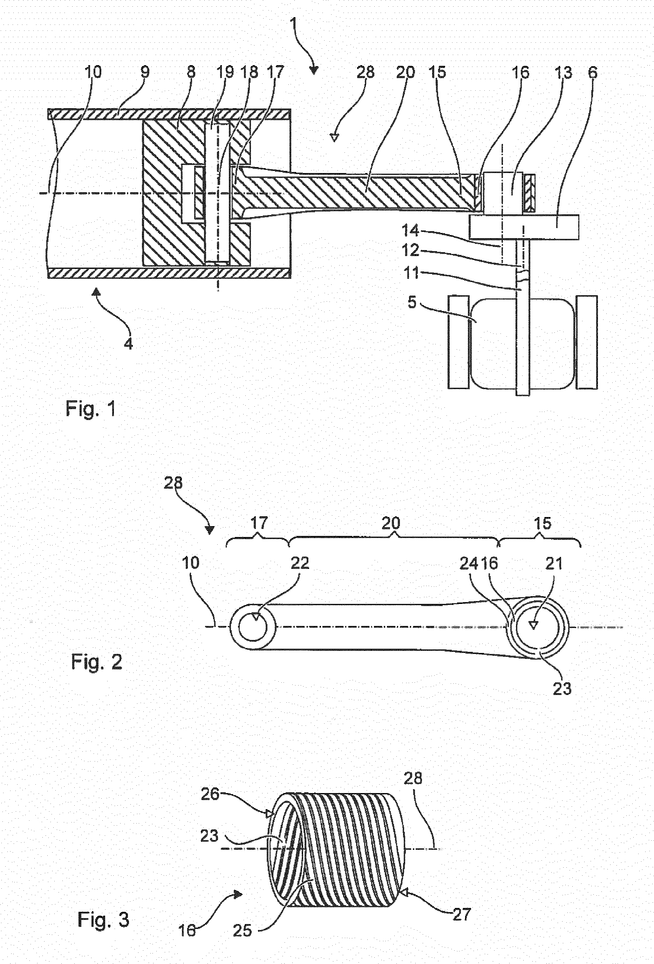

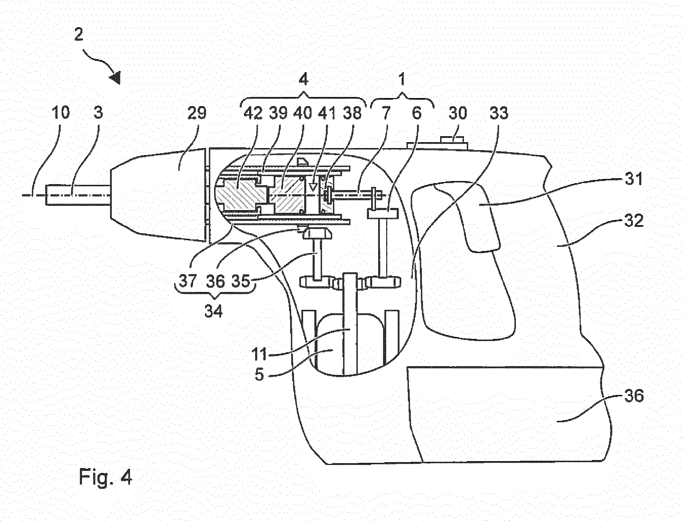

Fig. 1 zeigt eine beispielhafte Ausführungsform eines Exzenterantriebs **1**. Der Exzenterantrieb **1** ist insbesondere für den Einsatz in Handwerkzeugmaschinen **2** mit einem linear bewegten Werkzeug **3** vorgesehen, wie zum Beispiel bei einem Bohrhammer **2** (Fig. 4), einem Meißelhammer, einer Stichsäge, einer Säbelsäge und weiteren. Der Exzenterantrieb **1** treibt beispielsweise ein mechanisches Schlagwerk, ein pneumatisches Schlagwerk **4** oder einen Pendelhubmechanismus an.

Der Exzenterantrieb 1 beinhaltet einen Motor 5, ein Exzenterrad 6, ein Pleuel 7 und einen Schlitten **8** in einer Linearführung **9**. Der Schlitten **8** ist in einer Linearführung **9** längs einer Arbeitsachse **10** geführt beweglich. Der Exzenterantrieb **1** bewegt den Schlitten **8** längs dieser Arbeitsachse **10** periodisch vor- und zurück. Der Schlitten **8** kann ein Kolben, ein Mitnehmer für ein Werkzeug, etc. sein. Die Kraft für die Bewegung wird durch den Motor **5** eingespeist. Der Motor **5** ist vorzugsweise ein Elektromotor **5**. In alternativen Ausgestaltungen kann der Motor **5** auch ein Verbrennungsmotor sein. Der Motor **5** hat eine Abtriebswelle **11**, welche der Motor **5** um eine Achse drehend antreibt. Die Abtriebswelle **11** ist mit dem Exzenterrad **6** gekoppelt. Die Abtriebswelle **11** kann wie in Fig. 1 unmittelbar mit dem Exzenterrad **6** verbunden oder wie in Fig. 4 dargestellt mittelbar über ein Getriebe, eine Rutschkupplung oder ähnliche Komponenten mit dem Exzenterrad **6** verbunden sein. Das Exzenterrad **6** ist um eine (Dreh-) Achse **12** drehbar gelagert. Die Drehachse **12** ist senkrecht zu der Arbeitsachse **10**. Der Motor **5** treibt das Exzenterrad **6** um die Drehachse **12** drehend an. Das Exzenterrad **6** hat versetzt zu der Drehachse **12** einen (Lager-) Finger **13**. Der Finger **13** ist typischerweise zylindrisch ausgebildet. Die Exzenterachse **14** ist parallel zu der Drehachse **12**. Das Pleuel **7** ist mit einem antriebsseitigen Kopf **15** an dem Finger **13** gelagert. Der Kopf **15** hat eine Lagerbuchse **16**, in welche der Finger **13** eingesetzt ist. Der Finger **13** und die Lagerbuchse **16** bilden ein Drehlager. Das Pleuel **7** ist relativ zu dem Finger **13** um die Exzenterachse **14** drehbar aufgehängt. Ein abtriebsseitiger Kopf **17** des Pleuels **7** ist an dem Schlitten **8** gelagert. Der abtriebsseitige Kopf **17** ist gegenüber dem Schlitten **8** um eine Schwenkachse **18** schwenkbar aufgehängt. Beispielsweise ist der Kopf **17** an einer zylindrischen Welle **19** in dem Schlitten **8** gelagert. Die Schwenkachse **18** ist parallel zu der Exzenterachse **14**. Ein Schaft **20** des Pleuels **7** verbindet starr den antriebsseitigen Kopf **15** und den abtriebsseitigen Kopf **17**. Der Schaft **20** ist typischerweise ein länglicher Stab. Der Stab ist vorzugsweise gerade. In besonderen Ausgestaltungen kann der Stab gebogen, gewinkelt oder gestuft sein.

Das beispielhafte Pleuel **7** von Fig. 1 ist in einer Draufsicht in Fig. 2 dargestellt. Das Pleuel **7** besteht aus dem Schaft **20** an dessen beiden Enden der antriebsseitige Kopf **15** bzw. der abtriebsseitige Kopf **17** angeordnet sind. In der dargestellten Ausführungsform sind die beiden Köpfe unterschiedlich ausgestaltet. In alternativen Ausführungsformen können die beiden Köpfe identisch, gleich groß oder einen gleichen Aufbau bei unterschiedlichen Durchmessern aufweisen.

Der antriebsseitige Kopf **15** hat einen ringförmigen Aufbau. In dem Kopf **17** ist ein Hohlraum, welcher als Auge **21** bezeichnet wird. Das Auge **21** kann mittig in dem Kopf **15** angeordnet sein. Eine das Auge **21** umgebende Wandung des Kopfs **15** kann gleichmäßig sein. Vorzugsweise ist eine Wandstärke der Wandung über wenigstens ein Viertel, vorzugsweise über wenigstens die Hälfte des Umfangs des Auges **22** gleich groß. Eine Innenfläche **23** des Kopfs **17**, d.h. die das Auge **21** umschließende Fläche, ist zylindrisch.

Der beispielhafte Kopf **15** besteht aus einem äußeren Korpus **24** und der Lagerbuchse **16**, welche in den Korpus **24** eingebettet ist. Der äußere Korpus **24** umschließt ringförmig die Lagerbuchse **16**. Der Korpus **24** bildet den Hauptteil der Wandung. Eine Wandstärke des Korpus **24** hat beispielsweise einen Anteil von wenigstens 75 % an der Wandstärke des Kopfs **15**. Eine Abmessung (Höhe) der Lagerbuchse **16** entlang der Exzenterachse **14** ist gleich oder etwas geringer als die Abmessung des Kopfs **15**.

Der Korpus **24** des Kopfs **15** ist aus einem Spritzguss-Werkstoff. Der Spritzguss-Werkstoff besteht aus einem Thermoplast oder einer Mischung von Thermoplasten. Besonders geeignet Stoffgruppen sind Polybutylenterephthalat (PBT) und Polyamid (PA), aus der Stoffgruppe der Polyamide ist Poly-(N,N'-hexamethylen-adipin-diamid)-Poly-(hexamethylen-adipamid) besonders geeignet. Weitere geeignete Thermoplaste sind aus den Stoffgruppen Polyetheretherketon (PEEK), Polyphenylensulfid (PPS), Polysulfon (PSU), Polyetherimid (PEI) und Polytetrafluorethen (PTFE). Der Spritzguss-Werkstoff lässt sich ausreichend gut verarbeiten und das Pleuel **7** ist ausreichend steif und beständig.

Das Spritzguss-Werkstoff kann ein faserverstärkter Thermoplast sein. Eine Matrix des Spritzguss-Werkstoffs ist ein Thermoplast, vorzugsweise aus einer der Stoffgruppen Polybutylenterephthalat (PBT) und Polyamid (PA). Ein besonders geeignetes Polyamid ist Poly-(N,N'-hexamethylen-adipin-diamid)-Poly-(hexamethylen-adipamid). Alternative Stoffgruppen sind Polyetheretherketon (PEEK), Polyphenylensulfid (PPS), Polysulfon (PSU) und Polyetherimid (PEI). In die Matrix sind Fasern eingebettet. Für die Herstellung des Kopfs **15** geeignete Fasern sind sogenannte Kurzfasern. Eine Länge der Kurzfasern ist deutlich geringer als die Abmessungen des Kopf **17** oder des Pleuels **7**. Eine Länge ist insbesondere geringer als eine Höhe des Pleuels **7**, eine Breite des Pleuels **7** und eine Länge des Pleuels **7**. Vorzugsweise sind die Fasern kürzer als jede Abmessung der Hohlräume in der Spritzgussform, z.B. kürzer als die Wandstärke des Korpus **24**. Eine Länge der Fasern kann beispielsweise im Bereich zwischen 0,3 mm und 1 mm liegen. Ein Aspektverhältnis von Länge zu Durchmesser der Fasern liegt beispielsweise im Bereich zwischen 50 und 500. Die Kurzfasern können vermengt mit dem Thermoplast in eine Spritzgussform gespritzt werden. Die Kurzfasern verteilen sich in kontrollierter Weise gleichmäßig in der Spritzgussform. Die Fasern richten nach der Strömungsrichtung beim Einspritzen des Thermoplasts aus. Die relative Ausrichtung hängt dabei von der Länge der Fasern und der Strömungsgeschwindigkeit des Thermoplasts ab. Kurzfasern tendieren dazu, sich quer zu der Strömungsrichtung auszurichten. Die Kurzfasern können Karbonfasern, Aramidfasern, Glasfasern oder ein Gemisch der Fasern sein.

Die Lagerbuchse **16** besteht aus einem Faserverbundwerkstoff, welcher in eine thermoplastische Matrix eingebettete Endlos-Kohlenstofffasern **25** aufweist. Die Matrix besteht vorzugsweise aus dem gleichen Thermoplast oder zumindest aus der gleichen Stoffgruppe wie der Korpus **24**. Bei einer bevorzugten Paarung sind der Thermoplast des Korpus **24** und der Lagerbuchse **16** beide aus der Stoffgruppe der Polyamide. Beispielsweise ist die Matrix der Lagerbuchse **16** aus Polycaprolactam (PA6) und die Matrix des Korpus **24** aus Poly-(N,N'-hexamethylen-adipin-diamid)-Poly-(hexamethylen-adipamid). In die Matrix sind sogenannte Endlosfasern **25** eingebettet. Der Thermoplast des Korpus **24** und der Thermoplast der Lagerbuchse **16** können sich stoffschlüssig verbinden. Der Thermoplast der Lagerbuchse **16** kann dazu beim Einbringen des Thermoplasts für den Korpus **24** angeschmolzen werden. Das Anschmelzen kann unter anderem durch eine externe Wärmequelle, z.B. eine Infrarotheizung, die Wärme des noch flüssigen Thermoplasts des Korpus **24**, oder ähnliches erreicht werden. Vorzugsweise ist hierfür die Schmelztemperatur des Thermoplasts des Korpus **24** höher als die Schmelztemperatur des Thermoplasts für die Lagerbuchse **16**, beispielsweise unterscheiden sich die Schmelztemperaturen um wenigsten 10°C (Celsius), z.B. wenigstens 20°C, wenigstens 30°C, und höchstens um 40°C. Die Schmelztemperaturen liegen im Bereich zwischen 200°C und 350°C.

Während der Korpus **24** vorzugsweise Kurzfasern enthalten kann, enthält die Lagerbuchse **16** im Wesentlichen nur Endlosfasern **25**. Eine Länge der Endlosfasern **25** ist durch die Abmessungen der Lagerbuchse **16** begrenzt. Die Endlosfasern **25** beginnen an einem Stirnende **26** des Lagerbuchse **16** und enden an dem gegenüberliegenden Stirnende **27** der Lagerbuchse **16**. Eine Länge der Endlosfaser **25** entspricht damit zumindest der Höhe der Lagerbuchse **16**, welche im Wesentlichen gleich der Höhe des Pleuels **7** ist.

Die Endlosfasern **25** sind geordnet an der zylindrischen Innenfläche **23** ausgerichtet. Die Endlosfasern **25** verlaufen umfänglich entlang der Innenfläche **23**. Die Innersten der Endlosfasern 25bz sind freiliegend an der Innenfläche 23bz. Eine enge Anordnung der Endlosfasern **25** ermöglicht, dass ein erheblicher Anteil der Innenfläche **23** durch die Endlosfasern **25** gebildet wird. Die Endlosfasern **25** haben vorzugsweise einen Anteil von wenigstens 25 %, z.B. wenigstens 50 %, an der Innenfläche **23**.

Eine beispielhafte Anordnung der Endlosfasern **25** ist in Fig. 3 illustriert. Die Endlosfasern **25** sind helixförmig um die Innenfläche **23** gewickelt. Die Endlosfasern **25** umlaufen einfach oder vorzugsweise mehrfach das Auge **21**. Die Endlosfasern **25** verlaufen somit mit einem konstanten oder näherungsweise konstanten Radius zu der Exzenterachse **14**. Ein Krümmungsradius des Verlaufs der Endlosfasern **25** ist durch den Durchmesser der Lagerbuchse **16** vorgegeben. Eine Länge der Endlosfasern **25** ist vorzugsweise größer als der Umfang der Lagerbuchse **16**, z.B. mehr als zweifach so lang wie der Umfang. Die Endlosfasern **25** können zu Faserbündeln gruppiert sein. Die Faserbündel können in gleichem Drehsinn gewickelt sein. Alternativ kann eine Gruppe Faserbündel linkshändig und eine andere Gruppe Faserbündel rechtshändig um die Innenfläche **23** verlaufen. Mehrere Lagen von Faserbündel können in Schichten übereinander angeordnet sein. Die Faserbündel können gewickelt, geflochten, gewebt oder gelegt sein.

Die umlaufende Anordnung der Endlosfasern **25** bewirkt eine hohe Stabilität der Lagerbuchse **16**. Der Finger **13** des Exzenterrads **6** liegt unter Belastung an Abschnitten und nicht punktuell an den Endlosfasern **25** an. Die Endlosfasern **25** verteilen die eingeleiteten Kräfte entlang des Umfangs und als Zugkräfte damit entlang ihrer Länge. Die Endlosfasern **25** können die Kräfte nahezu allein aufnehmen, ohne die thermoplastische Matrix zu belasten. Die thermoplastische Matrix kann elastisch weich sein, d.h. unter den auftretenden Kräften nachgeben.

Die Endlosfasern **25** sind vorzugsweise Kohlefasern. Im Gegensatz zu dem Korpus **24** eignen sich Glasfasern nicht für die Lagerbuchse **16**. Die Kohlefasern haben gute tribologische Eigenschaften in Kombination mit dem Exzenterrad **6**, welches typischerweise aus Stahl gefertigt ist. Ein Abrieb der Kohlefasern kann zu einer Schmierung des Lagers beitragen.

Der Schaft **20** des Pleuels **7** hat die gleiche Materialzusammensetzung wie der Korpus **24** des Kopfs **15**. Der Schaft **20** ist aus dem gleichen Spritzguss-Werkstoff wie der Korpus **24** hergestellt. Der Schaft **20** und der Korpus **24** können zusammen in einer Spritzgussform hergestellt werden. Der Schaft **20** und der Kopf **15** sind ein monolithischer Körper, d.h. es gibt keine Grenzflächen, Fügezonen, etc. zwischen dem Schaft **20** und dem Kopf **15**. Die Unterteilung in Schaft **20** und Kopf **15** basiert nur auf einer geometrischen Anschauung und einer funktionellen Zuordnung.

Der abtriebsseitige Kopf **17** kann analog dem antriebsseitgen Kopf **15** ausgebildet sein. Der antriebsseitige Kopf **15** kann ebenfalls ein Auge **22** aufweisen. Eine zylindrische Längsachse des Auges **22** ist parallel zu der Längsachse **28** des Auges **22** des abtriebsseitigen Kopfs **17**. In einer alternativen Ausführungsform hat das Pleuel **7** an dem Kopf **15** eine drehbare oder starre Welle **19** anstelle eines Auges **22**.

Nachfolgend wird ein beispielhaftes Herstellungsverfahren für das Pleuel **7** beschrieben. Die Lagerbuchse **16** wird als ein Halbling aus den Endlosfasern **25** und dem Thermoplast hergestellt. Der Halbling wird in eine Spritzgussform für das Pleuel **7** eingelegt. Der andere Thermoplast wird verflüssigt und vermengt mit den Kurzfasern in die Spritzgussform eingespritzt. Das Einspritzen erfolgt vorzugsweise mittig in dem Schaft **20**, um die Fließwege kurz zu halten. Die Kurzfasern werden von dem anderen Thermoplast mittransportiert und verteilen sich im Wesentlichen gleichmäßig in der Spritzgussform. Der andere Thermoplast umläuft den Halbling. Die Oberfläche des Halblings wird dabei angeschmolzen. Das Anschmelzen kann durch den Wärmeeintrag des anderen Thermoplast oder zusätzlich durch externe Wärmequellen unterstützt erfolgen. Die beiden Thermoplaste erstarren zusammen, wobei sich eine stoffschlüssige Verbindung ergibt. Die beiden Thermoplaste können verschieden sein, vorzugsweise aus der gleichen Stoffgruppe.

Wie angedeutet kann der Halbling durch Wickeln, Flechten, Legen der Endlosfasern **25** um einen Kern erfolgen. In einer Ausführung werden die Endlosfasern **25** als Faserbündel in einem Band bereitgestellt, welches bereits den Thermoplast enthält. Das Band kann beispielsweise durch Tauch-Benetzen der Endlosfasern **25** in einem Bad des flüssigen Thermoplast erfolgen. Das Band wird um einen Kern zu einem Rohr gewickelt. Das Band wird beispielsweise mit einer Steigungshöhe pro Umlauf gewickelt, welcher der maximalen Breite des Bandes entspricht. Benachbarte Windungen des Bandes überlappen hierbei nicht. In einer anderen Ausführung kann das Band teilweise überlappend gewickelt werden. Aufgrund einer Schwankung der Breite des Bandes können zwischen den benachbarten Windungen Hohlräume entstehen. Das Rohr wird beispielsweise in einem Ofen erhitzt, um den Thermoplast anzuschmelzen, wodurch sich die überlappenden Lagen des Bandes verbinden. Das Erhitzen kann alternativ durch einen Laser, Heißluft oder andere Wärmequellen erfolgen. Die Lagen der Fasern verschmelzen miteinander zu einem soliden Körper. Alternativ kann das Band bereits beim Wickeln angeschmolzen werden, beispielsweise durch einen beheizten Wickelkern oder Wärmestrahlung einer Infrarot-Lichtquelle. Anschließend kann das Rohr abkühlt werden. Abschließend wird das Rohr auf die Länge der Lagerbuchse **16** abgelängt.

Fig. 4 zeigt als Beispiel einer handgeführten Handwerkzeugmaschine mit einem Exzenterantrieb **1** schematisch einen Bohrhammer **2**. Der beispielhafte Bohrhammer **2** hat einen Werkzeughalter **29**, in welchen ein Werkzeug **3** eingesetzt und verriegelt werden kann. Das Werkzeug **3** ist beispielsweise ein Bohrer, ein Meißel, etc.. Die beispielhaft dargestellt Ausführungsform dreht den Werkzeughalter **29** um einer Arbeitsachse **10** und über zugleich periodisch Schläge auf das Werkzeug längs der Arbeitsachse **10** auf. Die Handwerkzeugmaschine **2** kann einen Moduswahlschalter **30** aufweisen, welcher der dem Anwender ermöglicht selektiv die Drehbewegung und selektiv den schlagenden Betrieb zu aktivieren und zu deaktivieren. Der Anwender kann die Handwerkzeugmaschine **2** mit einem Taster **31** in Betrieb nehmen.

Die Handwerkzeugmaschine **2** hat einen Handgriff **32**. Der Anwender kann die Handwerkzeugmaschine **2** während des Betriebs mit dem Handgriff halten und führen. Vorzugsweise ist der Taster **31** an dem Handgriff derart angebracht, dass der Anwender den Taster **31** mit der den Handgriff **32** greifenden Hand betätigen kann. Der Handgriff **32** kann von einem Maschinengehäuse **33** über Dämpfelemente entkoppelt sein.

Die Handwerkzeugmaschine **2** hat einen Drehantrieb **34**, welcher mit dem Werkzeughalter **29** gekoppelt ist. Der Drehantrieb **34** beinhaltet einen Elektromotor **5**. Der Elektromotor **5** kann unter anderem ein untersetzendes Getriebe **35** und/oder eine Rutschkupplung **36** aufweisen. Eine Abtriebswelle **37** des Drehantriebs **34** ist an den Werkzeughalter **29** angebunden. Der Anwender kann den Drehantrieb **34** durch Betätigen des Tasters **31** ein- und ausschalten, wobei der Taster **31** entsprechend eine Stromversorgung des Elektromotor **5** steuert. In einer Ausführungsform kann eine Drehzahl des Elektromotors **5** über den Taster **31** eingestellt werden.

Die Handwerkzeugmaschine **2** hat ein pneumatisches Schlagwerk **4**, welches durch den Exzenterantrieb **1** angetrieben ist. Der Exzenterantrieb **1** beinhaltet den Elektromotor **5**, das Exzenterrad **6** und das Pleuel **7** und einen längs der Arbeitsachse **10** beweglichen Erregerkolben **38**. Der Erregerkolben **38** ist in einem Führungsrohr **39** längs der Arbeitsachse **10** geführt beweglich. Der Erregerkolben **38** bewegt sich bei drehendem Elektromotor **5** periodisch vor- und zurück. Der Erregerkolben **38** schließt mit einem Schlagkolben **40** zwischen einander eine pneumatische Kammer **41** ab. Ein radialer Abschluß der pneumatischen Kammer **41** ist bei der dargestellten Ausführungsform durch das Führungsrohr **39** gegeben, welches zugleich den Erregerkolben **38** und den Schlagkolben führt. In anderen Ausführungsformen kann der Schlagkolben hohl ausgebildet sein und der Erregerkolben **38** ist in dem Schlagkolben geführt oder vice versa. Die in der pneumatischen Kammer **41** eingeschlossene Luft wird durch den Erregerkolben **38** komprimiert und dekomprimiert. Die Druckwechsel koppeln den Schlägerkolben an die Bewegung des Erregerkolbens **38** an, die pneumatische Kammer **41** verhält sich analog einer Feder, daher auch der Name Luftfeder. Der Schlagkolben **40** kann unmittelbar auf das Werkzeug oder mittelbar über einen Döpper **42** auf das Werkzeug aufschlagen.

## Patentansprüche

1. Exzenterantrieb (1) für eine Handwerkzeugmaschine (2) mit
einem Motor (5),
ein Exzenterrad (6), das von dem Motor (5) angetrieben ist,
einer Linearführung (9),
einem Schlitten (8), welcher von der Linearführung (9) längs einer Achse (10) geführt ist,
einem Pleuel (7), das einen an dem Schlitten (8) aufgehängten Kopf (17) und einen zweiten, an dem Exzenterrad (6) aufgehängten Kopf (15) aufweist,
wobei in wenigstens einem der beiden Köpfe (17) eine Lagerbuchse (16) zum drehbaren Lagern des Pleuels (7) vorgesehen ist,
wobei der Kopf (15) aus einem Spritzguss-Werkstoff besteht und wobei die Lagerbuchse (16) aus einem Faserverbundwerkstoff besteht, welcher in thermoplastischer Matrix eingebettete Endlos-Kohlenstofffasern (25) aufweist.

2. Exzenterantrieb (1) nach Anspruch 1, **dadurch gekennzeichnet, dass** die Endlos-Kohlenstofffasern (25) entlang einer Innenfläche (23) der Lagerbuchse (16) verlaufen.

3. Exzenterantrieb (1) nach Anspruch 2, **dadurch gekennzeichnet, dass** die Endlos-Kohlenstofffasern (25) wenigstens einmal um die Innenfläche (23) der Lagerbuchse (16) verlaufen.

4. Exzenterantrieb (1) nach Anspruch 2 oder 3, **dadurch gekennzeichnet, dass** eine Länge der Endlos-Kohlenstofffasern (25) wenigstens dem Umfang der Innenfläche (23) der Lagerbuchse (16) entspricht.

5. Exzenterantrieb (1) nach einem der vorhergehenden Ansprüche, **dadurch gekennzeichnet, dass** die Endlos-Kohlenstofffasern (25) an einer Stirnseite der Lagerbuchse (16) beginnen und an einer gegenüberliegenden Stirnseite der Lagerbuchse (16) enden.

6. Exzenterantrieb (1) nach einem der vorhergehenden Ansprüche, **dadurch gekennzeichnet, dass** der Spritzguss-Werkstoff einen thermoplastischen Kunststoff enthält.

7. Exzenterantrieb (1) nach Anspruch 6, **dadurch gekennzeichnet, dass** die Lagerbuchse (16) stoffschlüssig mit dem Kopf (15) verbunden ist.

8. Exzenterantrieb (1) nach Anspruch 6, **dadurch gekennzeichnet, dass** der thermoplastische Kunststoff Polycaprolactam ist.

9. Exzenterantrieb (1) nach einem der vorhergehenden Ansprüche, **dadurch gekennzeichnet, dass** der Spritzguss-Werkstoff in einer thermoplastischen Matrix eingebettete Kurzfasern enthält.

10. Exzenterantrieb (1) nach Anspruch 9, **dadurch gekennzeichnet, dass** die Matrix des Spritzguss-Werkstoffs mit der Matrix des Faserverbundstoffs verschmolzen ist.

11. Exzenterantrieb (1) nach Anspruch 9 oder 10, **dadurch gekennzeichnet, dass** eine Länge der Kurzfasern geringer als ein Zehntel einer Länge der Endlosfasern (25) ist.

12. Exzenterantrieb (1) nach Anspruch 9 bis 11, **dadurch gekennzeichnet, dass** die thermoplastische Matrix des Spritzguss-Werkstoffs Poly-(N,N'-hexamethylen-adipin-diamid)-Poly-(hexamethylen-adipamid) ist.

13. Exzenterantrieb (1) nach Anspruch 9 bis 12, **dadurch gekennzeichnet, dass** eine Schmelztemperatur der Matrix des Spritzguss-Werkstoffs höher als eine Schmelztemperatur der Matrix des Faserverbundwerkstoffs ist.

14. Handwerkzeugmaschine (2) mit einem Exzenterantrieb (1) nach einem der vorhergehenden Ansprüche und einem pneumatischen Schlagwerk (4), welches an den Exzenterantrieb (1) gekoppelt ist.
